(19) Europäisches Patentamt
European Patent Office
Office européen des brevets

(11) Numéro de publication: **0 117 772**
**B1**

(12) # FASCICULE DE BREVET EUROPÉEN

(45) Date de publication du fascicule du brevet: **26.11.86**

(51) Int. Cl.⁴: **C 08 L 83/04**, C 08 K 3/32

(21) Numéro de dépôt: **84400104.0**

(22) Date de dépôt: **18.01.84**

(54) **Compositions organopolysiloxaniques contenant des polyacyloxysilanes et durcissant très rapidement en élastomères en présence d'accélérateur du type phosphate.**

(30) Priorité: **27.01.83 FR 8301505**

(43) Date de publication de la demande: **05.09.84 Bulletin 84/36**

(45) Mention de la délivrance du brevet: **26.11.86 Bulletin 86/48**

(84) Etats contractants désignés: **AT BE CH DE FR GB IT LI LU NL SE**

(56) Documents cité: **EP-A-0 003 143** **GB-A-2 026 512**

(73) Titulaire: **RHONE- POULENC SPECIALITES CHIMIQUES, "Les Miroirs" 18, Avenue d'Alsace, F-92400 Courbevoie (FR)**

(72) Inventeur: **Letoffe, Michel, 5, avenue de Limburg, F-69110 Sainte- Foy- lès- Lyon (FR)**
Inventeur: **Favre, Roger, 19, rue Albéric Pont, F-69005 - Lyon (FR)**
Inventeur: **Perrin, Patrice, 39, rue Boileau, F-69006 - Lyon (FR)**

(74) Mandataire: **Seugnet, Jean Louis, RHONE- POULENC INTERSERVICES Service Brevets Chimie 25, quai Paul Doumer, F-92408 Courbevoie Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 117 772 B1

LIBER, STOCKHOLM 1986

**Description**

La présente invention a pour objet des compositions organopolysiloxaniques durcissant en élastomères dès la température antiante, portant des radicaux acyloxy liés à des atomes de silicium, et renfermant des accélérateurs de durcissement choisis dans le groupe constitué par des phosphates et/ou des polyphosphates métalliques.

Ces compositions, à l'opposé des compositions monocomposantes connues portant également des radicaux acyloxy liés à des atomes de silicium (décrites en particulier dans FR-A-1 198 749; 1 220 348, 2 429 811 et EP-A-102 268) ne sont pas stables au stockage mais leur durée de réticulation est beaucoup plus courte, par exemple de l'ordre de quelques minutes, jusqu'à 60 minutes. Elles doivent donc être préparées extemporanément.

Elles sont utilisables dans des domaines d'applications exigeant une durée de réticulation rapide, indépendante du taux d'humidité de l'atmosphère environnante, tels que la fabrication de joint "in-situ" dans l'industrie automobile.

Des compositions organopolysiloxaniques, portant des radicaux acyloxy liés à des atomes de silicium, dont la durée de réticulation est indépendante de l'humidité de l'air ambiant sont connues; elles figurent dans GB-A-1 308 985. Plus précisément ce brevet a pour objet un procédé de durcissement consistant à ajouter aux compositions précédentes de 3 à 15 % d'un silico-aluminate de sodium ayant de 5 à 10 % en poids d'eau adsorbée.

Ce procédé permet de fabriquer des pièces moulées en élastomère silicone par injection masse pression. Toutefois, le brevet 1 308 985 enseigne qu'il est nécessaire, pour atteindre des durées de durcissement relativement courtes, par exemple de l'ordre de 30 minutes, d'introduire des quantités importantes du silico-aluminate de sodium (15 % dans le tableau de la page 2); cela a l'inconvénient de dégrader les propriétés mécaniques des élastomères issus des compositions. En outre, le brevet n'indique pas les moyens à mettre en oeuvre pour obtenir des durées de réticulation plus courtes que 30 minutes.

Il se posait donc le problème de mettre au point des compositions organopolysiloxaniques portant des radicaux acyloxy liés à des atomes de silicium durcissant rapidement dès la température ambiante de façon indépendante de l'humidité de l'air et conduisant à des élastomères ayant de bonnes propriétés mécaniques.

Cet ensemble de propriétés permettrait, entre autres choses, d'utiliser les compositions pour le collage ou le jointoiement de pièces

(1) circulant sur des chaines industrielles de montage

(2) ou pour lesquelles il n'existe pas d'aires de stockage disponibles qui assureraient leur durcissement complet.

La présente invention propose de nouvelles compositions ayant ces qualités recherchées.

La présente invention a ainsi pour objet des compositions organopolysiloxaniques comprenant un polysiloxane polyhydroxylé, un polyacyloxysilane et un accélérateur de durcissement caractérisées en ce que l'accélérateur de durcissement est un mélange constitué par de l'eau et un phosphate et/ou un polyphosphate alcalin ou alcalino-terreux.

Plus spécifiquement la présente invention a pour objet des compositions organopolysiloxaniques réticulant en élastomères dès la température ambiante, comprenant au moins:

A - 100 parties de polymères principalement $\alpha$ - $\omega$di(hydroxy)diorganopolysiloxaniques, de viscosité 700 à 1 000 000 mPa.s à 25°C, constitués chacun d'une succession de motifs diorganosiloxy de formule $R_2SiO$ dans laquelle les symboles R, identiques ou différents, représentent des radicaux hydrocarbonés ayant de 1 à 6 atomes de carbone, substitués ou non par des atomes d'halogènes, de groupes cyano.

B - 2 à 20 parties d'agents réticulants de formule générale $R_pSi(OCOR')_{4-p}$

dans laquelle le symbole R a la signification donnée sous (A), le symbole R', représente un radical hydrocarboné exempt d'insaturation aliphatique, ayant de 1 à 15 atomes de carbone et le symbole p représente zéro ou un.

C - 0 à 150 parties de charges minérales

D - 0,01 à 7 parties, pour 100 parties de A + B + C, d'accélérateurs de durcissement

caractérisées en ce que les accélérateurs (D) sont des mélanges constitués d'eau, ou d'un composé libérant de l'eau à la temperature de réticulation, et de phosphates et/ou de polyphosphates alcalin ou alcalino-terreux, l'eau présente à la température de réticulation représentant au moins 5 % du poids des phosphates et/ou polyphosphates.

Il peut ainsi s'agir de mélange d'eau et de phosphates ou polyphosphates de potassium, sodium, calcium et magnésium anhydres ou hydratés.

Lorsque les phosphates hydratés contiennent par molécule au moins 2 molécules d'eau de cristallisation, se séparant à une température $<60°C$, il n'est parfois plus nécessaire d'introduire de l'eau libre.

Les polymères (A) de viscosité 700 à 1 000 000 mPa.s à 25°C, de préférence 1 000 à 700 000 mPa.s à 25°C, sont des polymères essentiellement linéaires, constitués principalement de motifs diorganosiloxy de formule précitée $R_2SiO$, et bloqués à chaque extrémité de leur chaine par un groupe hydroxyle; toutefois la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 8 atomes de carbone, substitués ou non par des atomes d'halogènes ou des groupes cyano, et représentés par les symboles R, peuvent être choisis parmi:

- les radicaux alcoyles et halogénoalcoyles ayant de 1 à 8 atomes de carbone tels que les radicaux méthyles,

éthyles, n-propyles, isopropyles, n-butyles, n-pentyles, n-hexyles, éthyl-2 hexyles, n-octyles, trifluoro-3,3,3 propyles, trifluoro-4,4,4 butyles, pentafluoro-4,4,4,3,3 butyles

-les radicaux cycloalcoyles et halogénocycloalcoyles ayant de 4 à 8 atomes de carbone tels que les radicaux cyclopentyles, cyclohexyles, méthylcyclohexyl difluoro-2,3 cyclobutyles, difluoro-3,4 méthyl-5 cycloheptyles

-les radicaux alcényles ayant de 2 à 4 atomes de carbone tels que les radicaux vinyles, allyles, butène-2 yles

-les radicaux aryles et halogénoaryles ayant de 6 à 8 atomes de carbone tels que les radicaux phényles, tolyles, xylyles, chlorophényles, dichlorophényles, trichlorophényles

- les radicaux cyanoalcoyles dont les chainons alcoyles ont de 2 à 3 atomes de carbone tels que les radicaux β-cyanoéthyles et γ -cyanopropyles.

A titre d'exemple de motifs representes par la formule $R_2SiO$ on peut citer ceux de formules:

$(CH_3)_2SiO$

$CH_3(CH_2=CH)SiO$

$CH_3(C_6H_5)SiO$

$(C_6H_5)_2SiO$

$CF_3CH_2CH_2(CH_3)SiO$

$NC-CH_2CH_2(CH_3)SiO$

$NC-CH(CH_3)CH_2(CH_2=CH)SiO$

$NC-CH_2CH_2CH_2(C_6H_5)SiO$

Il doit être compris, selon une variante de l'invention, que l'on peut utiliser comme polymères (A) des copolymères ou un mélange constitué de polymères α -ω di(hydroxy)diorganopolysiloxaniques qui diffèrent entre eux par le poids moléculaire et/ou la nature des groupements liés aux atomes de silicium.

Ces copolymères α -ω di(hydroxy)diorganopolysiloxaniques (A) sont commercialisés; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides puis à traiter les polymèrisats avec des quantités calculées d'eau (FR-A-1 134 005, 1 198 749 et 1 226 745); cet apport d'eau, qui est d'autant plus élevé que les polymères à préparer ont une viscosité plus faible, peut être remplacé en totalité ou en partie par des huiles α - ω di(hydroxy)diorganopolysiloxaniques de faible viscosité, par exemple allant de 5 à 200 mPa.s a 25°C, ayant un taux élevé de radicaux hydroxyles, par exemple de 3 à 14 %.

Les agents réticulants (B) sont employés à raison de 2 à 20 parties de preférence de 3 à 15 parties, pour 100 parties des polymères α - ω di(hydroxy)diorganopolysiloxaniques (A).

Ils répondent à la formule précitée

$R_pSi(OCOR')_{4-p}$

dans laquelle, comme déjà indiqué, le symbole R à la signification donnée sous (A), le symbole R' représente un radical hydrocarboné exempt d'insaturation aliphatique ayant de 1 a 15 atomes de carbone et le symbole p représente zéro ou 1.

Des précisions ont été déjà fournies sur la nature des radicaux représentés par le symbole R. Quant au symbole R' il représente un radical choisi dans le groupe constitué:

- des radicaux alcoyles ayant de 1 à 15 atomes de carbone tels que les radicaux méthyles, éthyles, n-propyles, n-butyles, n-pentyles, éthyl-1 pentyles, n-hexyles, éthyl-2 hexyles, n-octyles, néodécyles, n-décyles, n-dodécyles, n-pentadécyles

- des radicaux cycloalcoyles ayant de 5 à 6 atomes de carbone nucléaire tels que les radicaux cyclopentyles et cyclohexyles

- des radicaux aryles ayant de 6 à 8 atomes de carbone tels que les radicaux phényles, tolyles, xylyles

A titre d'exemples d'agents réticulants (B), peuvent être cités ceux répondant aux formules suivantes:

$CH_3Si(OCOCH_3)_3$, $C_2H_5Si-(OCOCH_3)_3$, $CH_2=CHSi(OCOCH_3)_3$, $C_6H_5Si-(OCOCH_3)_3$

$CH_3Si(OCOCH(C_2H_5)(CH_2)_3-CH_3)_3$, $CF_3CH_2CH_2Si(OCOC_6H_5)_3$, $CH_3Si(OCOC_6H_5)_3$

$CH_3Si(OCOH_3)_2(OCOCH-(CH_2)-_3CH_3)$ , $CH_3COOSi(OCOCH-(CH_2)_3CH_3)_3$

$\quad\quad\quad\quad\quad\quad\quad\; | \quad\quad\quad\quad\quad\quad\quad\quad\quad\quad\quad\quad\quad\quad\quad\quad\quad\quad\quad |$

$\quad\quad\quad\quad\quad\quad\; C_2H_5 \quad\quad\quad\quad\quad\quad\quad\quad\quad\quad\quad\quad\quad\quad\quad\quad C_2H_5$

Il est clair que l'on peut remplacer dans les compositions de l'invention les constituants A et B par les produits dévolatilisés provenant de la réaction stoechiométrique de A sur B conformément au procede décrit dans FR-A-1.220.348.

Si l'on utilise un agent réticulant (B) dont les radicaux acyloxy sont de faible masse moléculaire, comme par

exemple le méthyltriacétoxysilane, il se forme lors de la réticulation un acide organique de faible masse moléculaire, généralement volatile aux températures usuelles de réticulation et qui s'élimine par évaporation de l'élastomère et peut être alors à l'origine de phénomènes de corrosion et éventuellement de pertes d'adhérence, en particulier lorsque la composition est déposée sur des supports métalliques. Par contre, si l'on utilise un agent réticulant B dont les radicaux acyloxy sont de masse moléculaire plus élevés, comme par exemple le méthyl tris (éthyl-2 hexanoyloxy) silane, il se forme de l'acide éthyl-2-hexanoïque qui n'est pas volatile aux températures usuelles de réticulation et qui reste dans l'élastomère, ce qui constitue un grave inconvénient, car l'élastomère présente alors une mauvaise tenue à chaud avec notamment une mauvaise DRC (Déformation rémanente à la compression).

En outre, l'acide restant dans l'élastomère est à l'origine de phénomènes de corrosion et de pertes d'adhérence, en particulier lorsque la composition est déposée sur des supports métalliques.

Un des avantages très important de l'utilisation des accélérateurs D conformes à l'invention réside précisément en ce que, dans le cas où ces produits sont suffisamment basiques (par exemple $K_3PO_4$, $Na_3PO_4$, $K_2HPO_4$, $Na_2HPO_4$ $K_4P_2O_7$, $Na_4P_2O_7$ et $Na_5P_3O_{10}$), ils neutralisent les acides formés au cours de la réticulation, ce qui supprime les inconvénients inhérents à la présence de ces acides.

Il est donc particulièrement avantageux d'utiliser l'accélérateur D suivant une quantité au moins stoechiométrique par rapport à la quantité d'acide pouvant être formé lors du durcissement de la composition.

Avec ces agents réticulants (B) peuvent être associés des silanes portant seulement chacun deux groupes hydrolysables; ces silanes répondent à la formule

$R''2Si(OCOR')_2$

dans laquelle les symboles R' ont la signification du symbole R' de la formule

$R_pSi(OCOR')_{4-p}$

et les symboles R" ont la signification du symbole R de cette même formule ou représente un radical tertiobutoxy de formule $(CH_3)_3C$-O-.

A titre d'exemples de ces silanes, peuvent être cités ceux de formules ci-après:

$(CH_3)_2Si(OCOCH_3)_2$

$CH_2=CH(CH_3)Si(OCOCH_3)_2$

$(C_6H_5)_2Si(OCOCH_3)_2$

$[(CH_3)_3C\text{-}O]_2Si(OCOCH_3)_2$

$(CH_3)_2Si[(OCOCH(C_2H_5)(CH_2)_3CE_3]_2$

$[(CH_3)_3CO]_2Si[OCOCH(C_2H_5)\ (CH_2)\ _3CH_3]_2$

La quantité molaire mise en oeuvre des silanes de formule

$R''_2Si(OCOR')_2$

par rapport à celle mise en oeuvre des silanes réticulants (B) de formule $Si(OCOR')_{4-p}$ n'est pas étroitement définie, il est nécessaire cependant qu'elle ait une limite supérieure de manière que le mélange des 2 types de silanes renferme toujours en moyenne au moins 2,5 groupes -OCOR' pour un atome de silicium.

Ainsi en prenant par exemple 1 mole du silane réticulant (B) de formule $RSi(OCOR')_3$ (avec $p = 1$), il faut lui associer au plus 1 mole du silane $R''_2Si(OCOR')_2$; de même en prenant 1 mole du silane réticulant (B) de formule $Si(OCOR')_4$ (avec $p = 0$) il faut lui associer au plus 3 moles de silane $R''_2Si(OCOR')_2$.

Le rôle principal des silanes de formule $R''_2Si(OCOR')_2$ est celui de coupler les chaines des polymères $\alpha$- $\omega$ di(hydroxy)diorganopolysiloxaniques (A) ce qui permet d'obtenir des élastomères ayant de bonnes caractéristiques physiques en partant de compositions renfermant des polymères (A) dont la viscosité est relativament faible, par exemple allant de 700 à 5 000 mPa.s à 25°C.

Les charges minérales (C) sont utilisées à raison de 0 à 150 parties, de préférence 5 à 120 parties, pour 100 parties des polymères $\alpha$ -$\omega$ di(hydroxy)diorganopolysiloxaniques (A). Ces charges peuvent se présenter sous la forme de produits très finement divisés dont le diamètre particulaire moyen est inférieur à 0,1$\mu$ m. parmi ces charges figurent les silices de combustion et les silices de précipitation; leur surface spécifique est généralement supérieure à 40 $m^2/g$, et se situe.le plus souvent dans l'intervalle 150 - 200 $m^2/g$.

Ces charges peuvent également se présenter sous la forme de produits plus grossièrement divisés, de diamètre particulaire moyen supérieur à 0,1$\mu$ m. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone et le métaborate de baryum; leur surface spécifique est généralement inférieure à 30 $m^2/g$.

Des charges (C) peuvent avoir été modifiées en surface, par traitement avec les divers composés organosiliciques habituellement employés pour cet usage. Ainsi ces composés organosiliciques peuvent être des organochlorosilanes, des diorganocyclopolysiloxanes, des hexaorgancdisiloxanes, des hexaorganodisilazanes ou des diorganohyclopolysilazanes (FR-A-1 126 884, 1 136 885 et 1 236 505, GB-A-1 024 234). Les charges traitées renferment, dans la plupart des cas, de 3 à 30 % de leur poids de composés organosiliciques.

Les charges (C) peuvent être constituées d'un mélange de plusieurs types de charges de granulométrie différente; ainsi par exemple, elles peuvent être constituées de 30 à 70 % de silices finement divisées de surface spécifique supérieure à 40 $m^2/g$ et de 70 à 30 % de silices plus grossièrement divisées de surface spécifique inférieure à 30 $m^2/g$.

Les phosphates et/ou les polyphosphates alcalins ou alcalino-terreux, mis en oeuvre en tant qu'accélérateurs

(D), sont préférentiellement choisis dans le groupe constitué des phosphates et polyphosphates de potassium, sodium, calcium et magnésium, à l'état anhydre ou hydraté. Parmi ces composés conviennent plus particuliérement ceux représentés ci-dessous par leur formule:

| Composés anhydres : | Composés hydratés : | |
|---|---|---|
| $K_3PO_4$ | $K_3PO_4.8H_2O$ | |
| $K_2HPO_4$ | $K_2HPO_4.3H_2O$ – $K_2HPO_4.H_2O$ | |
| $KH_2PO_4$ | $K_4P_2O_7.3,5\ H_2O$ | |
| $K_4P_2O_7$ | $Na_3PO_4.8H_2O$ | |
| $Na_3PO_4$ | $Na_2HPO_4.12H_2O$ | |
| $Na_2HPO_4$ | $Na_2HPO_4.7H_2O$ ; | $Na_2HPO_4.2H_2O$ , |
| $Na_2HPO_4$ | $Na_2HPO_4.2H_2O$ ; | $Na_2HPO_4.H_2O$ |
| $Na_4P_2O_7$ | $Na_4P_2O_7.10H_2O$ | |
| $Na_3HP_2O_7$ | $Na_3HP_2O_7.H_2O$ | |
| $Na_2H_2P_2O_7$ | $Na_2H_2P_2O_7.6H_2O$ | |
| $Na_5P_3O_{10}$ | $Na_5P_3O_{10}.6H_2O$ | |
| $CaHPO_4$ | $CaHPO_4.2H_2O$ | |
| $CaH_4(PO_4)_2$ | $CaH_4(PO_4)_2.H_2O$ | |
| $Mg_3(PO_4)_2$ | $Mg_3(PO_4)_2.8H_2O$ | |
| $MgHPO_4$ | $MgHPO_4.7H_2O$ ; | $MgHPO_4.3H_2O$ ; |
| | $MgHPO_4.H_2O$ | |

Les phosphates et polyphosphates anhydres ou hydratés, sont utilisés conjointement avec de l'eau introduite; celle-ci est présente à raison d'au moins 5 %, de préférence à raison d'au moins 8 % du poids des composés phosphatés nus (sans la prise en compte de leur eau d'hydratation éventuelle). La limite supérieure n'est pas étroitement fixée; il n'est pas utile, cependant, de dépasser 200 % du poids des composés phosphatés nus. Préférentiellement cette teneur est inférieure à 150 %.

L'eau peut être introduite à un moment quelconque de la préparation des compositions conformes à l'invention; en particulier elle peut être mélangée directement avec les phosphates et/ou polyphosphates ou avec les empâtages les contenant. Ces empâtages peuvent être constitués d'une huile silicone telle qu'un polymère

α -ω bis(triméthylsiloxy)diméthylpolysiloxaniques de viscosité variable allant par exemple de 500 à 100.000 mPa.s à 25°C, et éventuellement d'une ou plusieurs charges minérales représentant au plus 15 % du poids de l'huile. Si l'on prend soin, ou si l'on a la possibilité de chauffer les empâtages contenant les phosphates et/ou polyphosphates à l'état hydraté, à une température dépassant 100°C, par exemple, allant de 110 à 180°C pendant au moins 30 minutes, il se produit bien souvent une libération d'une partie ou de la totalité de l'eau d'hydratation. Cette eau, dispersée dans l'empâtage, se comporte comme de l'eau introduite et, il peut s'avérer non nécessaire d'en ajouter.

L'introduction d'eau n'est en particulier pas indispensable lorsque les phosphates et polyphosphates sont choisis parmi ceux qui renferment de l'eau de cristallisation séparable par chauffage à une température peu élevée. plus précisément ces composés pbosphatés, utilisables sans apport d'eau, doivent libérer par molécule au moins 2 molécules d'eau, et de préférence au moins 3 molécules d'eau, à une température inférieure ou égale à 60°C.

A titre d'exemples de tels composés, peuvent être cités ceux de formules:

$K_3PO_4.8H_2O$
$K_2HPO_4.3H_2O$
$Na_3PO_4.8H_2O$
$Na_2HpO_4.12H_2O$
$NaH_2pO_4.2H_2O$
$Na_2H_2p_2O_7.6H_2O$
$MgHPO_{4\text{-}7}H_2O$

Les compositions organopolysiloxaniques conformes à l'invention, peuvent comporter, en dehors des constituants A, B, C, D, des catalyseurs de durcissement habituellement choisis dans le groupe constitué:

- des sels métalliques d'acides carboxyliques, de préférence des sels d'organoétains d'acides carboxyliques tels que le diacétate et le dilaurate de dibutylétain
- des produits de réaction des sels d'organoétains d'acides carboxyliques avec les esters titaniques (US-A-3 409 753)
-des dérivés organiques du titane et du zirconium tels que les esters titaniques et zirconiques (EP-A-102 268).

Ces catalyseurs de durcissement sont utilisés habituellement à raison de 0,0004à 6 parties, de préférence de 0,0008 à 5 parties pour 100 parties des polymères α -ω di(hydroxy)diorganopolysiloxaniques (A).

Les compositions organopolysiloxaniques peuvent comporter également des adjuvants et additifs usuels, comprenant en particulier des stabilisants thermiques. Ces derniers produits, qui, par leur présence, améliorent la résistance thermique des élastomères silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Avantageusement les compositions selon l'invention contiennent de 0,1 à 15 parties, et de préférence de 0,15 à 12 parties, de stabilisants thermiques pour 100 parties de polymères α - ω di(hydroxy)diorganopolysiloxaniques (A).

Comme autres additifs peuvent être mentionnés des composés daméliorant la résistance à la flamme; ils sont choisis de préférence parmi les dérivés organiques du phosphore, les composés organiques halogénés, les dérivés organiques et minéraux de platine.

Outre les constituants principaux A, B, C, D et les additifs précités, des composés organopolysiloxaniques particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxaniques sont bien connus; ils comprennent plus specialement:

(If) des polymères α -ω bis(triorganosiloxy)diorganopolysiloxaniques et/ou α (hydroxy), ω (triorganosiloxy)diorganopolysiloxaniques, de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyles, vinyles, phényles, 60 % au moins de ces radicaux organiques étant des radicaux méthyles et 10 % au plus ètant des radicaux vinyles.

La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans FR-A-978 058, 1 025 150, 1 108 764 et 1 370 884. On utilise de préférence les huiles α -ω -bis(triméthylsiloxy)diméthylpolysiloxaniques de viscosité allant de 10 mpa.s à 1 000 mPa.s à 25°C. Ces polymères, qui jouent le rôle de plastifiants, peuvent être introduits à raison d'au plus 150 parties, de préférence de 5 à 120 parties, pour 100 parties des polymères α - ω -di(hydroxy)diorganopolysiloxaniques (A).

(2f) des polymères méthylpolysiloxaniques ramifiés, liquides, ayant de 1,4 a 1,9 radical méthyle par atome de silicium constitués d'une combinaison de motifs de formules:

$(CH_3)_3SiO_{0,5}$

$(CH_3)_2SiO$ et

$CH_3SiO_{1,5}$

ils renferment de 0,1 à 8 % de groupes hydroxyles. Ils peuvent être obtenus par hydrolyse des chlorosilanes correspondants comme l'enseignent FR-A-1 408 662 et 2 429 811. On utilise, de préférence, des polymères ramifiés dont les motifs sont répartis, selon les rapports suivants:

$(CH_3)_3SiO_{0,5} / (CH_3)_2SiO = 0,01$ à 0,15

et $CH_3SiO_{1,5} / (CH_3)_2SiO = 0,1$ à 1,5

Ces polymères peuvent être introduits à raison d'au plus 70 parties, de préférence de 3 à 50 parties, pour 100 parties des polymères α - ω -di(hydroxydiorganopolysiloxaniques (A). Ils apportent les propriétés de thixotropie notamment avec les silices traitées.

(3f) des huiles diorganopolysiloxaniques bloquées par des groupes hydroxyles et/ou alcoxyles inférieurs ayant de 1 à 4 atomes de carbone, de faible viscosité en général comprise dans l'intervalle 2 mPa.s à 4 000 mPa.s à 25°C (si ces huiles sont bloquées uniquement per des groupes hydroxyles leur viscosité est inférieure à 700 mPa.s à 25°C); les radicaux organiques liés aux atomes de silicium de ces huiles sont, comme précédemment, choisis parmi les radicaux méthyles, vinyles, phényles, 40 % au moins de ces radicaux étant des radicaux méthyles et 10 % au plus étant des radicaux vinyles.

Comme groupes alcoxyles inférieurs bloqueurs de chaine peuvent être cités les groupes méthoxyles, éthoxyles, isopropoxyles, n-propoxyles, n-butoxyles, isobutoxyles, tertiobutoxyles. Les taux en groupes hydroxyles et/ou alcoxyles s'étalent généralement de 0,5 à 20 %. Ces huiles sont préparées selon des techniques usuelles décrites plus précisément dans FR-A- 938 292, 1 104 674, 1 116 196,1 278 281 et 1 276 619. De préférence, on utilise des huiles α - ω dihydroxydiméthylpolysiloxaniques de viscosité 10 à 300 mPa.s à 25°C, des huiles α - ω -dihydroxyméthylphénylpolysiloxaniques de viscosité 200 à 600 mPa.s à 25°C, et des huiles α -ω -diméthoxy (ou diéthoxy) diméthylpolysiloxaniques de viscosité 30 à 2 000 mPa.s à 25°C. Elles peuvent être introduites à raison d'au plus 50 parties, de préférence de 2 à 40 parties, pour 100 parties des polymères α -ω -di(hydroxy)diorganopolysiloxaniques (A). Ces huiles permettent de réduire la viscosité globale et sont considérés selon l'expression usuelle comme des "process aid".

(4f) des composés organosiliciques hydroxylés choisis parmi les composés répondant à la formule générale

$Z'SiZ_2(OSiZ_2)_wOH$

qui sont solides à la température ambiante. Dans cette formule les symboles Z, identiques ou différents,

représentent des radicaux méthyles, éthyles, n-propyles, vinyles, phényles; le symbole Z' représente un radical hydroxyle où Z, et le symbole w représente zéro, 1 ou 2. A titre d'exemples concrets de ces composés peuvent être cités: le diphénylsilane diol, le méthylphénylsilanediol, le diméthylphénylsilanol, le tétraméthyl-1,1,3,3 disiloxanediol, le diméthyl-1,3 diphényl-1,3 disiloxanediol et le tétraméthyl-1,1,5,5 diphényl-3,3 trisiloxanediol. Ils peuvent être introduits à raison d'au plus 30 parties, de préférence 0,5 à 20 parties, pour 100 parties de polymères

α -ω -di(hydroxy)diorganopolysiloxaniques (A). Ils conferent des propriétés thixotropantes au milieu qui en général se gélifie légèrement sous leur action

Les polymères

α - ω-bis(triorganosiloxy)diorganopolysiloxaniques et/ou α-(hydroxy ω-(triorganosiloxy)diorganopolysiloxaniques décrits sous (If) peuvent être remplacés, totalement ou partiellement, par des composés organiques inertes vis-à-vis des constituants A, B, C, D et miscibles au moins avec les polymères

α - ω-di(hydroxy)diorganopolysiloxaniques (A). Comme exemples de ces composés organiques peuvent être mentionnés les polyalcoylbenzènes obtenus par alcoylation du benzène à l'aide d'oléfines à longue chaîne, en particulier des oléfines à 12 atomes de carbone issues de la polymérisation du propylène. Des composés organiques de ce type figurent per exemple dans FR-A-2 392 476 et 2 446 849.

Les compositions selon l'invention peuvent être éventuellement utilisées après dilution dans des composés organiques liquides, les diluants sont de préférence des produits usuels commercialisés choisis parmi:

- les hydrocarbures aliphatiques, cycloaliphatiques, aromatiques, halogénés ou non, tels que le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthcdichlorobenzène
- les cétones aliphatiques et cycloaliphatiques tels que la méthyléthylcétone, la méthylisobutylcétone, la cyclohexanone, l'isophorone
- les esters tels que l'acétate d'éthyle, l'acétate de butyle, l'acétate d'éthylglycol.

La quantité de diluant demeure en général peu importante, elle est en général inférieure à 50 %.

La préparation des compositions conformes à l'invention peut avoir lieu en une seule étape, par brassage dans un réacteur approprié de l'ensemble des constituants A, B, C, D et éventuellement des additifs et adjuvants précités. L'ordre d'introduction de ces composés, dans le réacteur peut être quelconque il est toutefois préférable d'ajouter les accélérateurs D après tous les autres composés de manière à éviter un durcissement prématuré de la masse.

La préparation des compositions peut également avoir lieu en 2 étapes. Selon cette technique qui constitue un objet de la présente invention des compositions monocomposantes sont tout d'abord préparées par mélange à l'abri de l'humidité des constituants A, B, C et éventuellement des additifs et adjuvants usuels. Elles sont stables au stockage et durcissent seulement par exposition à l'air humide. Il est bien évident que de telles compositions pourraient, le cas échéant, être utilisées seules et leur durcissement ou réticulation, se développerait alors à partir des surfaces en contact avec l'air ambiant et se poursuivrait progressivement vers l'intérieur de la masse. La durée de leur durcissement complet serait relativement lente et dépendrait principalement de l'épaisseur des couches déposées et du degré hygrométrique de l'atmosphère entourant les compositions. Il faudrait ainsi généralement une période de 24 heures à la température mbiante, avec un degré hygrométrique de 60 % pour réticuler correctement une couche de 4 mm d'épaisseur.

Dans une deuxième étape, on ajoute au moment de l'emploi, à ces compositions monocomposantes, les accélérateurs de durcissement D. Les compositions obtenues, conformes à l'invention, doivent être utilisées rapidement puisque leur durcissement, à l'opposé de celui des compositions monocomposantes, se développe dans toute la masse. La durée de leur durcissement complet est très variable étant donné qu'elle dépend de la nature et des quantités mises en oeuvre des accélérateurs D, de la présence ou non d'eau et de la forme sous laquelle cette eau est introduite. En jouant sur ces divers peramètres il est pousible d'obtenir des temps de durcissment s'échelonnant de quelques minutes à 60 minutes, ou plus. La température est aussi un paramètre important; en effet, des variations de la valeur de la température ont des répercussions très nettes sur la vitesse de durcissement. Si la température augmente (les variations sont positives) la durée de durcissement est réduite; dans le cas contraire la durée est augmentée.

Ainsi des réductions de durée de durcissement de moitié et parfois beaucoup plus peuvent être obtenues en exposant des compositions à des températures s'échelonnant per exemple de 50 à 200°C au lieu de les abandonner à la température ambiante, c'est-à-dire comprise dans l'intervalle 15 - 25°C.

Un autre de la présente invention est constitué par l'utilisation des compositions à durcissement rapide pour l'obtention de joints.

Les compositions conformes à l'invention peuvent être employées pour de multiples applications comme le jointoiement dans l'industrie du bâtiment, l'assemblage des matériaux les plus divers (métaux, matières plastiques, caoutchoucs naturels et synthétiques, bois, cartons, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

En outre, elles conviennent plus spécialement pour la formation de joints "in-situ" utilisés dans l'industrie automobile. Ces joints "in-situ" englobent plusieurs types, à savoir les joints "écrasés", les joints "en forme" et les joints "injectés".

Les joints "écrasés" sont formés à la suite de l'application d'un cordon pâteux des compositions sur la zone

de contact entre 2 éléments métalliques à assembler. Le cordon pâteux est d'abord déposé sur l'un des éléments puis l'autre élément est aussitôt appliqué sur le premier; il en résulte un écrasement du cordon avant qu'il ne se transforme en élastomère. Ce type de joints s'adresse à des assemblages ne devant pas être couramment démontés (joints de carter d'huile et joints de carter de distribution).

Les joints "en forme" sont également obtenus à la suite de l'application d'un cordon pâteux des compositions sur la zone de contact entre 2 éléments à assembler. Toutefois, après la dépose du cordon pâteux sur l'un des éléments on attend le durcissement complet du cordon en élastomère et à ce moment-là seulement applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère caoutchouteux épose toutes les irrégularités des surfaces à jointoyer de ce fait, il est inutile (1) d'usiner soigneusement les surfaces métalliques devant être mises en contact les unes avec les autres et (2) de serrer avec force les assemblages obtenus; ces particularités permettant de supprimer dans une certaine mesure, des joints de fixation, des entretoises, des nervures destinés habituellement à raidir et renforcer les éléments des assemblages.

Comme les compositions conformes à l'invention durcissent rapidement dès la température ambiante, en présence ou en l'absence d'humidité, en milieu confiné, ou à l'air ambiant il en résulte que les joints "en forme" (et aussi les autres joints "in-situ") découlant du durcissement de ces compositions peuvent être fabriqués dans des conditions très contraignantes. Ils peuvent, par exemple, être fabriqués sur les chaînes de montage usuelles de l'industrie automobile munies d'un appareil automatique de dépose des compositions. Cet appareil automatique possède bien souvent une tête mélangeuse équipée d'une buse de dépose, celle-ci se déplaçant selon le profil des joints à fabriquer. La tête mélangeuse peut recevoir la composition polysiloxanique monocomposante et l'accelerateur, elle peut disposer également d'une troisième entrée permettant d'introduire un solvant servant à rincer l'installation après usage (cyclohexane).

Les compositions, fabriquées et distribuées au moyen de cet appareil doivent avoir une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boites à vitesses, d'entretoises de distribution et même de carters d'huile.

Les joints injectés sont formés en milieu confiné, dans des cavités souvent complètement closes; les compositions placées dans ces cavité se transforment rapidement en élastomères dont les propriétés sont identiques à celles d'élastomères découlant du durcissement des compositions à l'air ambiant. Ces joints peuvent assurer par exemple l'étanchéité des paliers de vilbrequins.

Les compositions conformes à l'invention conviennent également pour la formation de joints à durcissement rapide dans d'autres domaines que l'automobile. Ainsi elles peuvent servir à coller et à jointoyer des armoires électriques en matière plastique, à produire des joints pour aspirateurs et pour fers à repasser à la vapeur.

Les élastomères issus du durcissement des compositions conformes à l'invention ont des propriétés mécaniques identiques à celles des élastomères issus des compositions monocomposantes connues donc formées par simple mélange des constituants A, B, C et éventuellement d'additifs usuels sans l'introduction des accélérateurs D. En particulier, les déformations rémanentes à la compression sont relativement faibles, de l'ordre par exemple de 8 à 35%; en outre, la réticulation complète mesurée par la dureté Shore A est obtenue dès la fin des temps de réticulation précédemment mentionnés lesquels s'étendent généralement de quelques minutes à 60 minutes parfois plus mais jamais au-delà de 3 heures. Dans le cas des compositions monocomposantes, la réticulation complète demande, dans les conditions les plus favorables, au moins une dizaine d'heures. Par ailleurs, la simple introduction d'eau dans les compositions monocomposantes, bien qu'elle accélère sensiblement le processus de durcissement ne permet pas de les réticuler correctement; en général, la dureté Shore A définitive est de 15 à 40% plus faible que celle obtenue sans eau ou avec l'accélérateur D.

**Exemple**

On prépare une composition $C_2$ durcissant dès la température ambiante en élastomère, par mélange des constituants suivants:

-100 parties d'une huile
α-ω di (hydroxy)diméthylpolysiloxanique de viscosité 7000 mPa.s à 25° C
-10 parties d'une silice de combustion de surface spécifique 150 $m^2/g$
-85 parties d'une silice de diatomées de diamètre particulaire moyens 5 μm
-4 parties d'une huile α-ω di(hydroxy) diméthylpolysiloxanique de viscosité 50 mPa.s à 25° C
-5 parties de méthyltriacétoxysilane
-0,004 partie de titanate de butyle

On stocke cette composition dans un récipient étanche à l'humidité. Elle ne présente pas de signes d'évolution après 1 an de stockage.

On prépare, par ailleurs, 4 empâtages $B_1$, $B_2$, $B_3$ et $B_4$ renfermant chacun un accélérateur de durcissement de la composition $C_2$. Chaque empâtage est formé par mélange de:

-100 parties d'une huile α-ω bis (triméthylsiloxy)diméthylpolysiloxanique de viscosité 30 000 mPa.s à 25° C
-2 parties d'une silice de combustion de surface spécifique 200 $m^2/g$
-20,4 parties d'un phosphate de sodium (sauf pour $B_4$) en tant qu'accélérateur de durcissement. Des d451tails sur la structure du phosphate de sodium sont donnés ci-après:

**Empâtage B1**

Emploi d'un phosphate de formule $Na_2HPO_4.12H_2O$; les 20,4 parties se décomposent en 8,09 parties de $Na_2HPO_4$ et 12,31 parties d'eau de cristallation. Ce phosphate perd 5 moles d'eau par chauffage à une température ne dépassant pas 35° C, soit 5,13 parties d'eau sur les 12,31 parties d'eau de cristallation.

**Empâtage B2**

Emploi d'un phosphate de formule $Na_3PO_4.8H_2O$; les 20,4 parties se décomposent en 10,8 parties de $Na_3PO_4$ et 9,6 parties d'eau de cristallation. Ce phosphate perd 2 moles d'eau par chauffage à une température ne dépassant pas 60° C, soit 2,4 parties d'eau sur les 9,6 parties d'eau par cristallation.

**Empâtage B3**

Emploi d'un phosphate anhydre de formule $Na_2PO_4$. Les 20,4 parties comportent 14,6 parties du phosphate anhydre et 5,8 parties d'eau introduite au cours de la préparation de l'empâtage B; la quantité d'eau introduite représente 40% de la quantité du phosphate mis en oeuvre.

**Empâtage B4**

Pas d'emploi de phosphate; les 20,4 parties se décomposent en 5,8 parties d'eau introduite et 14,6 parties de l'huile α-ω bis(triméthylsiloxy)diméthylpolysiloxanique de viscosité 30 000 mPa.s à 25°C. Cet empâtage est utilisé à titre de comparaison.

On mélange intimement en une periode de 2 min, 100 parties de la composition $C_2$ avec 5 parties de l'un des empâtages ci-dessus. On prépare ainsi 4 compositions différentes que l'on étale chacune, dès la fin de leur préparation, à l'air ambiant, en une couche de 4 mm d'épaisseur, sur des plaques de polyéthylène. On étale de même la composition $C_2$ à l'air ambiant sur des plaques de polyéthylène (température 22°C, degré hygrométrique 65%). Les couches déposées durcissent et se transforment en bandes caoutchouteuses dont on mesure la dureté Shore A en fonction du temps.

Les résultats sont rassemblé dans le tableau ci-dessous; y figure également la quantité introduite de l'accélérateur en % de la composition $C_2$.

| | | Composition $C_2$ | Composition $C_2$ + Empâtage $B_1$ | Composition $C_2$ + Empâtage $B_2$ + | Composition $C_2$ + Empâtage $B_3$ + | Composition $C_2$ + Empâtage $B_4$ + |
|---|---|---|---|---|---|---|
| Quantité de phosphate (1) en % de la composition $C_2$ | | 0 | 0,33 | 0,44 | 0,59 | 0 |
| Dureté après durcis- -sement | Temps | (2) | | | | |
| | 5 min | non mesurable | 30 | 15 | 10 | 5 |
| | 10 min | non mesurable | 35 | 20 | 15 | 10 |
| | 30 min | non mesurable | 45 | 35 | 30 | 25 |
| | 60 min | non mesurable | 50 | 45 | 45 | 30 |

(1) On tient compte dans le calcul uniquement de la quantité de phosphate nu ou anhydre présent dans chaque empâtage (sans prise en compte de l'eau de cristallasation éventuelle).

(2) Il faut environ 14 heures pour obtenir une dureté Shore A de 10, et 36 heures pour obtenir une dureté A de 50.

Les résultats du tableau montrent que les phosphates de sodium hydratés (empâtages $B_1$ et $B_2$) perdant de l'eau d'hydration à une température < à 60°C sont actifs comme accélérateurs de durcissement; il en est de même des phosphates de sodium anhydres (empâtage $B_3$) mélangés avec de l'eau. L'eau seule accélère également le durcissement mais ne permet pas d'atteindre rapidement une dureté Shore A convenable (empâtage $B_4$).

**Revendications**

1 - Compositions organopolysiloxaniques comprenant:

A - 100 parties de polymères principalement α - ω di(hydroxy)diorganopolysiloxaniques, de viscosité 700 à 1 000 000 mpa.s à 25°C, constitués chacun d'une succession de notifs diorganosiloxy de formule $R_2SiO$ dans laquelle les symboles R, identiques ou différents, représentent des radicaux hydrocarbonés ayant de 1 à 8 atomes de carbone, substitués ou non par des atomes d'halogènes, de groupes cyano.

B - 2 à 20 parties d'agents réticulants de formule générale $R_pSi(OCOR')_{4-p}$

dans laquelle le symbole R a la signification donnée sous (A), le symbole R', représente un radical hydrocarboné exempt d'insaturation alipnatique, ayant de 1 à 15 atomes de carbone et le symbole p représente zéro ou un.

C - 0 à 150 parties de charges minérales

D - 0,01 à 7 parties, pour 100 parties de A + B + C, d'accélérateurs de durcissement

caractérisées en ce que les accélérateurs (b) sont des mélanges constitués d'eau, ou d'un composé libérant de l'eau, et de phospnates et/ou de polyphosphates alcalin ou alcalino-terreux.

2 - Compositions selon la revendication 1, caractérisées en ce que l'eau présente è la température de réticulation représente au moins 5 % du poids des phosphates et/ou polyphosphates.

3 - Compositions selon l'une des revendications 1 et 2 caractérisé en ce que le phosphate et/ou le polyphosphate présents dans le mélange accélérateur est un sel dont le cation est choisi parmi le potassium, le sodium, le calcium ou le magnésium.

4 - Compositions selon l'une des revendications 1 et 3 dans laquelle l'eau introduite représente de 5 à 200 % du poids des phosphates et/ou polyphosphates nus.

5 - Compositions selon l'une des revendications 1 à 4 dans lesquelles les radicaux R portés par les atomes de silicium de l'organopolysiloxane polyhydroxylé sont choisis parmi:

- les radicaux alcoyles et halogénoalcoyles ayant de 1 à 8 atomes de carbone
- les radicaux cycloalcoyles et halogénocycloalcoyles ayant de 4 à 8 atomes de carbone
- les radicaux alcényles ayant de 2 à 4 atomes de carbone
- les radicaux aryles et halogénoaryles ayant de 6 à 8 atomes de carbone
- les radicaux cyanoalcoyles dont les chaînons alcoyles ont de 2 à 3 atomes de carbone.

6 - Compositions selon l'une des revendications 1 à 5 dans lesquelles le polyacyloxysilane a pour formule:

$R_pSi(OCOR')_{4-p}$

dans laquelle le symbole p représente 0 ou 1 le symbole R' représentant: - des radicaux alcoyles ayant de 1 à 15 atomes de carbone

- des radicaux cycloalcoyles ayant de 5 à 6 atomes de carbone nucléaire
- des radicaux aryles ayant de 6 à 8 atomes de carbone

7 - Compositions selon l'une quelconque des revendications précédentes, caractérisées en ce qu'elles comportent une quantité au moins stoechiométrique d'accélérateur de durcissement ayant une basicité suffisante, par rapport à la quantité d'acide pouvant être formé lors du durcissement de la composition.

8 - Compositions selon l'une quelconque des revendications précédentes, caractérisées en ce que les constituants A et B sont remplacés par les produits dévolatilisés provenant de la réaction stoechiométrique de A sur B.

9 - Compositions selon l'une quelconque des revendications précédentes, caractérisées en ce qu'elles comportent en outre un catalyseur de durcissement.

10 - Procédé pour l'obtention des compositions selon l'une des revendications 1 à 9 selon lequel on prépare en une première étape une composition monocomposante par le mélange à l'abri de l'numidité des constituants A, B, C et éventuellement des additifs et adjuvants usuels, puis ajouté et homogénéisé au moment de l'emploi des accélérateurs de durcissement D.

11 - Utilisation de compositions selon l'une des revendications 1 à 9 pour l'obtention de joints.

**Patentansprüche**

1. Organopolysiloxanzusammensetzungen umfassend:

A - 100 Teile an Polymeren, hauptsächlich α - ω Di-(hydroxy)-diorganopolysiloxane der Viskosität 700 bis 1 000000 mPa.s bei 25°C, die jeweils aus einer Folge von Diorganosiloxygruppierungen der Formel $R_2SiO$ bestehen, worin die Symbole R, die identisch oder verschieden sind, Kohlenwasserstoffreste mit 1 bis 8 Kohlenstoffatomen bedeuten, die substituiert oder nicht substituiert sind durch Halogenatome oder Cyanogruppen,

B - 2 bis 20 Teile Vernetzungsmittel der allgemeinen Formel $R_pSi(OCOR')_{4-p}$, worin das Symbol R die unter A angegebene Bedeutung hat, das Symbol R' einen Kohlenwasserstoffrest, frei von aliphatischer Unsättigung mit 1 bis 15 Kohlenstoffatomen bedeutet und das Symbol p Null oder Eins bedeutet,

C - 0 bis 150 Teile mineralische Füllstoffe,

D - 0,01 bis 7 Teile, pro 100 Teile A + B + C, an Härtungsbeschleunigern, dadurch gekennzeichnet, daß die Beschleuniger D Mischungen sind, die aus Wasser oder einer Wasser freisetzenden Verbindung und Alkali- oder Erdalkaliphosphaten und/oder -polyphosphaten bestehen.

2. Zusammensetzungen gemäß Anspruch 1, dadurch gekennzeichnet, daß das Wasser bei der Vernetzungstemperatur wenigstens 5 % des Gewichts der Phosphate und/oder Polyphosphate ausmacht.

3. Zusammensetzungen gemäß einem der Ansprüche 1 und 2, dadurch gekennzeichnet, daß das Phosphat und/oder Polyphosphat, das in dem Beschleunigergemisch vorliegt, ein Salz ist, dessen Kation ausgewählt ist unter Kalium, Natrium, Calcium oder Magnesium.

4. Zusammensetzungen gemäß einem der Ansprüche 1 und 3, wobei das eingeführte Wasser von 5 bis 200 % des Gewichts der nackten Phosphate und/oder Polyphosphate ausmacht.

5. Zusammensetzungen gemäß einem der Ansprüche 1 bis 4, worin die Reste R, die von den Siliciumatomen des polyhydroxylierten Organopolysiloxans getragen sind, ausgewählt sind unter:

- den Alkyl- und Halogenalkylresten mit 1 bis 8 Kohlenstoffatomen,
- den Cycloalkyl- und Halogencycloalkylresten mit 4 bis 8 Kohlenstoffatomen,
- den Alkenylresten mit 2 bis 4 Kohlenstoffatomen,
- den Aryl- und Halogenarylresten mit 6 bis 8 Kohlenstoffatomen,
- den Cyanoalkylresten, deren Alkylketten 2 bis 3 Kohlenstoffatome haben.

6. Zusammensetzungen gemäß einem der Ansprüche 1 bis 5, worin das Polyacyloxysilan die Formel $R_pSi(OCOR')_{4-p}$ hat, worin das Symbol p Null oder Eins bedeutet und das Symbol R' bedeutet:

- Alkylreste mit 1 bis 15 Kohlenstoffatomen,
- Cycloalkylreste mit 5 bis 6 Kernkohlenstoffatomen,
- Arylreste mit 6 bis 8 Kohlenstoffatomen.

7. Zusammensetzungen gemäß einem der vorhergehenden Ansprüche, dadurch gekennzeichnet, daß sie eine mindestens stöchiometrische Menge Härtungsbeschleuniger mit einer ausreichenden Basizität in Bezug auf die Säuremenge, die während der Härtung der Zusammensetzung gebildet werden kann, enthält.

8. Zusammensetzungen gemäß einem der vorhergehenden Ansprüche, dadurch gekennzeichnet, daß die Bestandteile A und B ersetzt werden durch die Produkte, die von der stöchiometrischen Reaktion von A auf B stammend kondensiert werden.

9. Zusammensetzungen gemäß einem der vorhergehenden Ansprüche, dadurch gekennzeichnet, daß sie außerdem einen Härtungskatalysator enthalten.

10. Verfahren zur Erzielung der Zusammensetzungen gemäß einem der Ansprüche 1 bis 9, dadurch gekennzeichnet, daß man in einer ersten Stufe eine Einkomponentenzusammensetzung durch Vermischen der Bestandteile A, B, C und gegebenenfalls üblicher Zusätze und Hilfsmittel unter Feuchtigkeitsausschluß herstellt und daß im Augenblick des Gebrauchs die Härtungsbeschleuniger D zugegeben und homogenisiert werden.

11. Verwendung der Zusammensetzungen gemäß einem der Ansprüche 1 bis 9 zur Erzielung von Dichtungen und Verbindungen.

**Claims**

1. Organopolysiloxane compositions comprising:

A - 100 parts of chiefly α,ω-di(hydroxy)diorganopolysiloxane polymers, with a viscosity of 700 to 1,000,000 mPa.s at 25°C, each consisting of a sequence of diorganosiloxy repeat units of formula $R_2SiO$, in which the symbols R, which are identical or different, denote hydrocarbon radicals containing from 1 to 8 carbon atoms, substituted or otherwise by halogen atoms or cyano groups,

B - 2 to 20 parts of crosslinking agents of general formula

$R_pSi(OCOR')_{4-p}$

in which the symbol R has the meaning given under (A), the symbol R' denotes a hydrocarbon radical free from aliphatic unsaturation and containing from 1 to 15 carbon atoms and symbol p denotes zero or one,

C - 0 to 150 parts of mineral fillers, and

D - 0.01 to 7 parts, per 100 parts of A + B + C, of hardening accelerators,

characterized in that the accelerators (D) are mixtures consisting of water or of a compound releasing water

and alkali metal or alkaline-earth metal phosphates and/or polyphosphates.

2. Compositions according to Claim 1, characterized in that the water present at the temperature of crosslinking represents at least 5% of the weight of the phosphates and/or polyphosphates.

3. Compositions according to either of Claims 1 and 2, characterized in that the phosphate and/or polyphosphate present in the accelerator mixture is a salt whose cation is chosen from potassium, sodium, calcium or magnesium.

4. Compositions according to either of Claims 1 and 3, in which the water introduced represents from 5 to 200% of the weight of the phosphates and/or polyphosphates by themselves.

5. Compositions according to one of Claims 1 to 4, in which the radicals R carried by the silicon atoms in the polyhydroxylated organopolysiloxane are chosen from:

alkyl and haloalkyl radicals containing from 1 to 8 carbon atoms
cycloalkyl and halocycloalkyl radicals containing from 4 to 8 carbon atoms
alkenyl radicals containing from 2 to 4 carbon atoms
aryl and haloaryl radicals containing from 6 to 8 carbon atoms, and
cyanoalkyl radicals in which the alkyl chains contain from 2 to 3 carbon atoms.

6. Compositions according to one of Claims 1 to 5 in which the polyacyloxysilane has the formula:

$R_pSi(OCOR')_{4-p}$

in which the symbol p denotes 0 or 1, the symbol R' denoting:

alkyl radicals containing from 1 to 15 carbon atoms
cycloalkyl radicals containing from 5 to 6 ring carbon atoms, and
aryl radicals containing from 6 to 8 carbon atoms.

7. Compositions according to any one of the preceding claims, characterized in that they comprise an at least stoichiometric quantity of hardening accelerator having a sufficient basicity, relative to the quantity of acid which is capable of being formed when the composition hardens.

8. Compositions according to any one of the preceding claims, characterized in that the constituents A and B are replaced by devolatilized products originating from the stoichiometric reaction of A with B.

9. Compositions according to any one of the preceding claims, characterized in that they additionally comprise a hardening catalyst.

10. Process for obtaining compositions according to one of Claims 1 to 9, according to which a single-component composition is prepared in a first stage by mixing, under protection from moisture, the constituents A, B, C and, if appropriate, usual additives and adjuvants, to which hardening accelerators D are then added and homogenized at the time of use.

11. Use of compositions according to one of Claims 1 to 9 for producing seals.